# EUROPEAN PATENT APPLICATION

(11) **EP 1 700 679 A1**
(43) Date of publication of application: **13.09.2006**
(21) Application number: 06110723.1
(22) Date of filing: 06.03.2006
(51) Int. Cl.: B29B 15/12, D04H 1/64, D04H 3/12

(54) **Method and apparatus for applying liquid compositions to fiber webs**

(30) Priority: 07.03.2005 US 73770
(71) Applicant: OWENS CORNING, Toledo, Ohio 43659 (US); Owens Corning Espana SA, Barcelona (ES); Owens Corning Canada Inc., Toronto, Ontario M1V 1Z5 (CA)
(72) Inventor: Seng, Jocelyn M., GRANVILLE, OH 43023 (US); Glaser, Helmut I., GRANVILLE, OH 43023 (US); Clements, Christopher J., Johnstown, OH 43031 (US); Lee, Brian K., Rockwood, Ontario N0B 2K0 (CA); Hager, William G., Westerville, OH 43082 (US); Adolphs, George, 08201, SABADELL (ES); Lee, Yien-Ming L., 68538, OH Westerville (US)
(74) Representative: Joly, Jean-Jacques

(57) **Abstract**

Provided are a method and an apparatus for the application of a flowable composition (20) to fiber webs or mats (14), particularly oriented fiber mats, that suppresses the disruption of the fibers within the fiber mat that may result from turbulent flow in and near the point at which the flowable composition contacts the fiber mat. The apparatus includes a conveyor (16) configured to pass through and be supported by a flood pan (18) that allows the flowable composition to accumulate and move with the fiber mat in a machine direction in order to submerge or saturate the fiber mat as it passes through the flood pan. The apparatus also includes a recess (44) provided in the flood pan substantially below an impact zone for redirecting the flowable composition while suppressing turbulent flow and counter-current flow within the flowable composition.

## Description

### TECHNICAL FIELD AND INDUSTRIAL APPLICABILITY

The present invention generally relates to a method and apparatus for applying a binder composition to a fiber mat and, more specifically, to an improved method of applying a liquid binder composition to a fiber web or mat in a manner that reduces the disruption of the fibers within the web or mat and improves the uniformity of the resulting fabric product.

### BACKGROUND OF THE INVENTION

One conventional method for manufacturing oriented continuous fiber reinforcing products for use in open molding processes typically involves orienting the continuous fiber reinforcing web and knitting over the reinforcing strands so that they are held together during subsequent handling and cutting operations. However, in addition to increasing the product cost and the complexity of the manufacturing equipment, the knitting process tends to disturb the orientation of the continuous fiber reinforcement. Another conventional method involves attaching a thin veil, typically formed from one or more polymers, to at least one surface of the continuous fiber reinforcing web to help maintain the orientation of the reinforcing fibers during their subsequent use in reinforcing applications. As with knitting, however, applying a veil tends to increase both the product cost and the complexity of the manufacturing equipment and also tend to increase the loss on ignition (LOI) of the reinforcing product.

In order to address certain of the drawbacks associated with the knitting process, a number of different systems and methods have been developed for applying liquid or other flowable binder compositions to fiber reinforcement products and fiber mats in order to alter the properties of the fiber batt for use as an insulation product. Conventional application methods include applying a binder composition to one major surface of a fiber batt while drawing a vacuum on the opposite side to assist the movement of the binder composition through the relatively thick fiber batt. The binder composition will tend to be retained at points of contact or in narrow gaps between adjacent fibers and, after curing, will improve the structural properties of the fiber batt.

During the manufacture of reinforcing fiber products such as electrical pultrusion continuous filament glass mat (CFM), however, the binder composition or agents are typically applied by flooding a relatively thin mat of glass filaments with an aqueous slurry and then curing the binder agents to unify the individual continuous glass strands into a unitary mat. As with the insulating batt, the use of the binder agents permit the manufacture of an oriented reinforcing fiber product that requires a reduced level or substantially no knitting in order to obtain a mat having desired structural properties.

Reinforcing fiber products manufactured in this manner tend to exhibit certain advantages over similar products that incorporate a substantial quantity of knitting. These advantages may include improved alignment of the reinforcing fibers, improved mechanical performance resulting from reduced fiber crimp and fewer catenary configurations when compared with a corresponding knitted fabric, improved cutability and increased manufacturing line speeds.

### SUMMARY OF THE INVENTION

The exemplary method and apparatus allow for the coating of a fiber mat, particularly oriented fiber mats, with a binder slurry or other liquid composition while suppressing the disruption of the fibers within the fiber mat that may result from turbulent flow in and near the point at which the liquid flow contacts the fiber mat. The fiber mat, for example a fiberglass mat, is conveyed through a binder application process on a conveyor.

A portion of the conveyor passed through and is supported within a generally open trough-shaped component that may be referred to as a pan or flood pan. The flood pan allows the liquid applied to the fiber mat to accumulate and move with the fiber mat in a machine direction for a period of time and may fully submerge or saturate the fiber web as the web passes through one or more portions of the flood pan.

The liquid, which may be an aqueous slurry, may be applied to the fiber mat from one or more reservoirs that feed into an inlet of a coating device such as a curtain coater or other suitable coating device or devices. The coating device will typically be located above and towards the inlet end of the flood pan and may be configured to apply the liquid to the fiber mat in a substantially uniform laminar flow through a slot or opening provided in the coating device. The liquid discharge slot will typically be configured to extend completely across the fiber mat in a direction generally perpendicular to the movement of the fiber mat in the machine direction.

The velocity, flow rate and angle of impact of the liquid being applied to the fiber mat may be adjusted and controlled within certain ranges by adjusting various process parameters including the size of the slot, the internal configuration of the coating device, the distance between the discharge slot and the fiber mat, the relative orientation of the conveyor and the liquid flow, the viscosity of the liquid and, for slurries, the solids size distribution and relative content. The fiber mat and the conveyor have a relatively high percentage of open area and will, therefore, typically be substantially permeable to the liquid flow, thereby allowing the slurry to pass easily around the incorporated strands through the fiber mat and the conveyor.

After passing through the fiber mat and the conveyor, however, the liquid being applied with a conventional apparatus will encounter a conventional flood pan surface arranged substantially perpendicular to the direction of liquid flow. As a result, when the substantially vertical liquid flow impinges on the generally horizontal surface of the flood pan, the liquid flow is redirected to a horizontal flow and will typically be carried along with the conveyor to the flood pan outlet. The rate at which the applied liquid is removed from the flood pan is a function of various parameters including, for example, the flow rate of the liquid into the flood pan, the thickness of the conveyor, the drag effects of the conveyor passing through the liquid, the viscosity of the liquid, and the depth of the liquid within the flood pan.

The flow rate of the liquid being applied to the fiber mat will typically be sufficient to ensure the fiber mat is fully submerged within the liquid as it is conveyed through a substantial portion of the flood pan. In a binder application process, a portion of the liquid, or more typically an aqueous slurry, will be retained within the fiber mat, particular at or near points of contact or narrow gaps between adjacent fibers. This residual portion of the binder composition can then be cured, typically by increasing the temperature of the impregnated fiber mat within an oven to improve the properties of the fiber mat while adding a relatively small organic component to the finished product as evidenced by a small LOI.

An exemplary apparatus according to the present invention includes a curved recess provided in and extending across the flood pan below the conveyor. This recess may be positioned so that its upstream edge is positioned near the upstream limit of the impact zone. This recess will tend to redirect the generally downward flow of the coating composition to a generally machine or conveying direction flow while suppressing or reducing the turbulence associated with this flow direction change, thereby reducing the disruption of the fibers within the fiber web or mat and suppressing the formation of a backwave, that is, an accumulation of the coating composition upstream from the impact zone. The relative orientation of the coating composition flow, flood pan, conveyor and recess may be modified to some extent to improve the coating performance by, for example, adjusting the angle at which the coating composition contacts the fiber web.

### BRIEF DESCRIPTION OF THE DRAWINGS

The above and other features and advantages of the present invention will become more apparent by describing in detail exemplary embodiments thereof with reference to the attached drawings in which:
FIG. 1 illustrates a portion of a conventional CFM manufacturing line;
FIG. 2 illustrates a binder application portion of a conventional CFM manufacturing line;
FIGS. 3A-3D illustrate the use of various combinations of rollers to separate the conveyor from the flood pan;
FIG. 4 illustrates an exemplary embodiment of the invention;
FIG. 5 illustrates an exemplary embodiment of the invention during the binder application process;
FIG. 6 illustrates another exemplary embodiment of the invention utilizing a variable cavity;
FIG. 7 illustrates another exemplary embodiment of the invention utilizing interchangeable cavity blocks; and
FIGS. 8A and 8B illustrate additional exemplary embodiments of the invention in which the angle at which the applied liquid contacts the fiber mat may be adjusted.

These drawings have been provided to assist in the understanding of the exemplary embodiments of the invention as described in more detail below and should not be construed as unduly limiting the invention. In particular, the relative spacing, positioning, sizing and dimensions of the various elements illustrated in the drawings are not drawn to scale and may have been exaggerated, reduced or otherwise modified for the purpose of improved clarity.

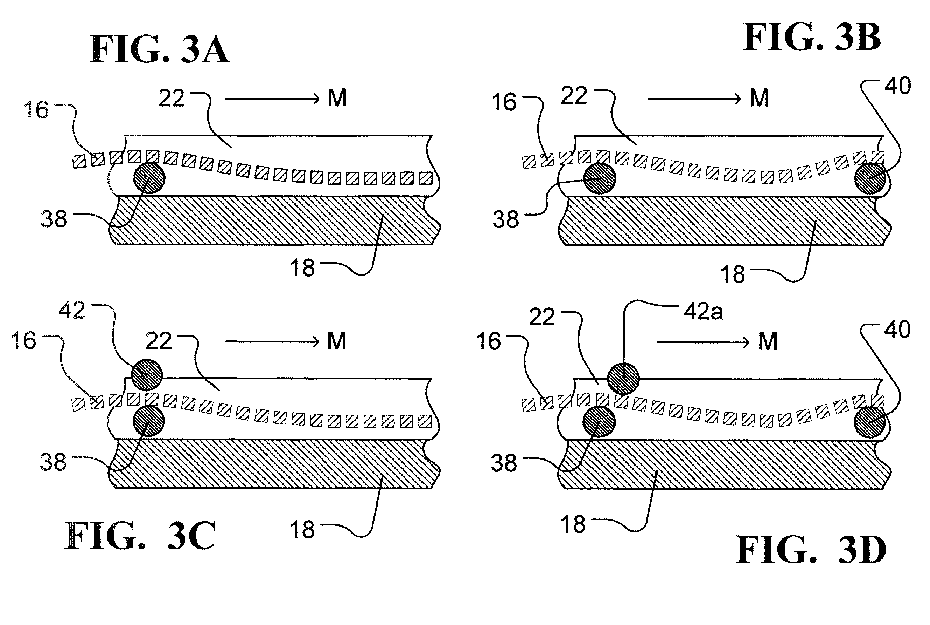

Those of ordinary skill in the art will also appreciate that a range of alternative configurations have been omitted simply to improve the clarity and reduce the number of drawings. Similarly, those of ordinary skill will appreciate that certain of the various structural elements illustrated in the exemplary embodiments shown in, for example, FIGS. 3A-8B may be selectively and independently combined to form other configurations suitable for practicing the invention.

### DETAILED DESCRIPTION OF EXEMPLARY EMBODIMENTS

In the manufacturing process used to form electrical pultrusion continuous filament glass mat (CFM), one or more binder agents are typically applied to the fibers incorporated in the fiber mat. The binder agents tend to unify a number of individual continuous glass strands into a non-woven web and may be deposited as a solution, emulsion or slurry, particularly an aqueous slurry.

The glass filaments are typically transported through the binder application process on a conveyor or fabric. Conveyors, for example, may be fabricated from a number of links formed from spirally wound coils of stainless wire and stainless hinge wires. A conveyor fabric, for example, may be woven from high strength polymer fibers or yarns using a variety of weaving patterns to support the fiber mat will provide sufficient open area through which the binder composition may pass. Depending on its construction, the conveyor may have a larger cross sectional volume than that of the fiber web that is being supported and conveyed by the conveyor.

A portion of the conveyor is supported within an open-ended trough called a flood pan. The purpose of the flood pan is to allow sufficient slurry to accumulate and fully submerse or saturate the non-woven web for some period of time. The slurry may be fed from a reservoir into a coating device, such as a curtain coater, located above and towards the inlet end of the flood pan. A coating device will typically be configured to discharge the slurry toward the upper surface of the fiber mat as a laminar flow liquid "curtain" that extends across the fiber mat and wets its entire width in a substantially uniform and simultaneous fashion. As will be appreciated by those of ordinary skill in the art, any conventional coating device may be utilized so long as it is capable of providing the necessary flow rate and uniformity for the particular coating application.

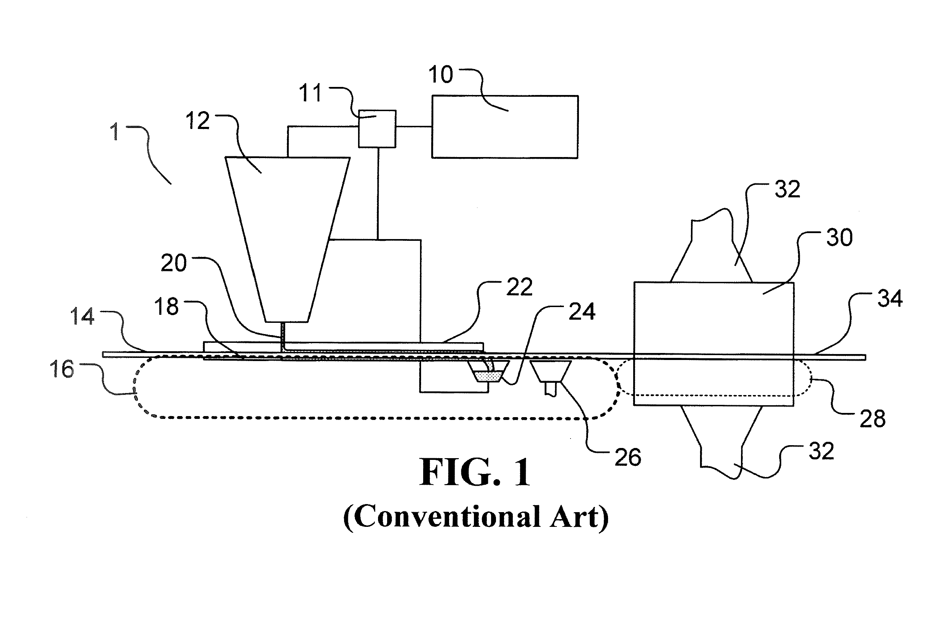

As illustrated in FIG. 1, a conventional coating assembly 1 will include a coating composition supply or reservoir 10 from which a coating composition may be fed to a coating device 12, such as a curtain coater. The coating composition may include a portion of a recycle stream or other components added in an optional mixing device 11 to produce one or more desired coating compositions as needed. A fiber mat 14 is supported and conveyed in a machine direction M by a conveyor 16 that passes through a flood pan 18 having a bottom and sides 22 that define an elongated trough. The flood pan may also incorporate one or more structures 19 that serve as barriers to the upstream flow of the coating composition and/or separate the conveyor from the horizontal surface of the flood pan.

As the fiber mat 14 passes below the coating device 12, a substantially uniform flow of the coating composition 20 is applied to the upper surface of the fiber mat. The region in which the coating composition 20 contacts the upper surface of the fiber mat 14 ean be called the impact zone. The coating composition remains in the flood pan and is carried along with the fiber mat 14 in the machine direction to the outlet of the flood pan. Collection devices 24 may be used for collecting and recycling the excess coating composition. Additional removal devices such as eductors or simple vacuum heads 26 may be utilized for removing an addition portion of the coating composition from the coated fiber mat 14.

After the majority of the coating composition has been removed, the fiber mat 14 can be fed onto another conveyor 28 and carried into a treatment device 30, such as an oven through which one or more gases, such as heated air or nitrogen, may be forced, or from which moisture laden air may be removed, using passages or duct 32 to dry, set and/or cure the coating composition to produce a coated fiber mat product 34. This coated fiber product may then be subjected to additional processing in order to prepare one or more commercial products suitable for use in reinforcing or insulating applications.

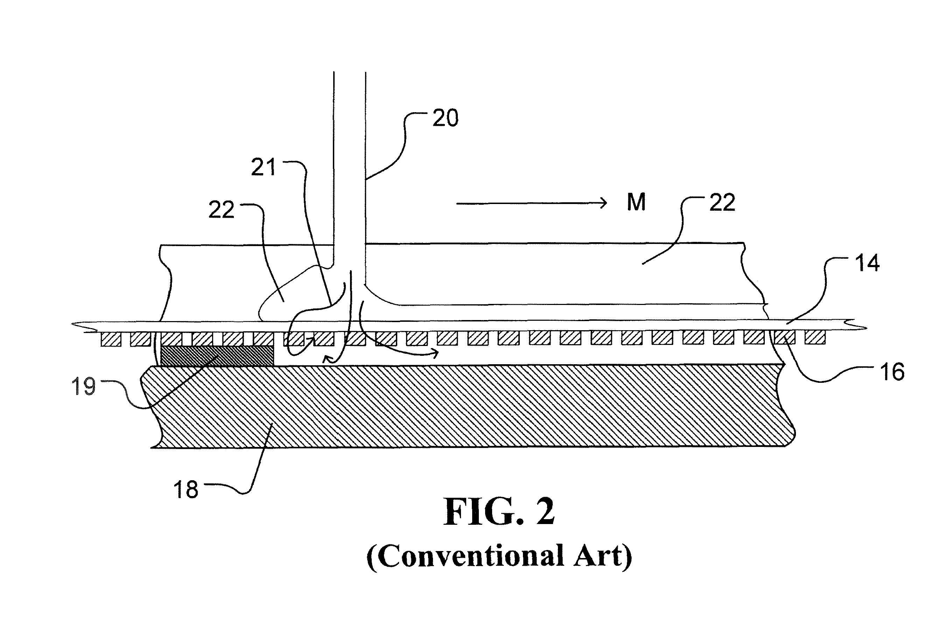

As reflected in FIG. 2, however, the flow of the coating composition 20, after passing through the fiber mat 14 and the conveyor 16 in a substantially vertical direction, contacts the substantially horizontal surface of the flood pan 18, producing a turbulent flow region 21 and, depending on the application conditions, may produce an accumulation of the coating composition or backwave 22 upstream from the impact zone as the coating composition is redirected into a substantially horizontal flow in the machine direction. Depending on the flow rate, relative velocities and the characteristics of the fiber mat 14, this turbulent flow can alter the orientation of the fibers or filaments incorporated in the fiber mat 14. Particularly with respect to oriented filament products, this alteration can degrade the reinforcing properties and reduce the uniformity of the resulting products.

As illustrated in FIGS. 3A-3D, one method for reducing the turbulence associated with the deflected coating composition flow is to increase the separation distance between the fiber mat 14 and the flood pan 18 at and/or near the impact zone. As illustrated in FIG. 3A, a single roller or guide 38 may be used to lift the conveyor 16 off the flood pan 18 at a single point, after which the conveyor will tend to return to a position more closely adjacent the surface of the flood pan for the remainder of its passage through the flood pan. As illustrated in FIG. 3B, a second roller or guide 40 may be used in cooperation with the first roller or guide 38 to suspend the conveyor 16 in a generally caternary configuration above the flood pan 18. As illustrated in FIG. 3C, another roller or guide 42 can be positioned above the first roller or guide 38 for controlling the tension in the conveyor, contact between the fiber mat 14 and the conveyor 16 or other aspects of the movement of the fiber mat and conveyor through the flood pan 18. As illustrated in FIG. 3D, another roller or guide 42a can be offset in a machine (or counter machine) direction from the roller or guide 38 that is separating the conveyor 16 from the flood pan 18.

Although, as illustrated in FIGS. 3A-3D, using rollers or other guides to lift the conveyor just before the impact zone and thereby increase the space beneath the fiber mat available for the flow transition can improve the uniformity of the coated fiber mat, utilizing such devices increases the complexity of the apparatus and can introduce additional difficulties, particularly in those instances in which the fiber mat is relatively rigid and may fail to track the movement of the conveyor precisely and result in separation of the fiber web from the upper conveyor surface.

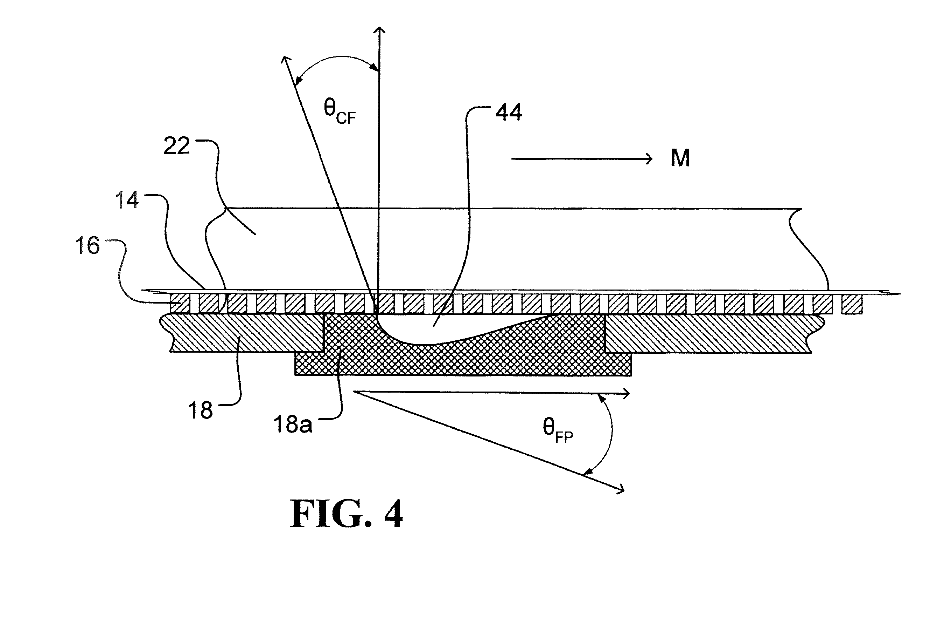

As illustrated in FIG. 4, an exemplary embodiment of the present invention includes a recess 44 provided in the flood pan 18, the recess being positioned so that its upstream edge is positioned at or near the upstream limit of the impact zone. As indicated by the angle θ_{CF}, the coating device can be configured to produce a sheet flow of the coating composition that contacts the upper surface of the fiber mat 14 at angle that is offset to some extent from a plane perpendicular to the surface of the fiber mat. Further, as illustrated by the angle θ_{FP}, the orientation of the flood pan can be independently offset somewhat from horizontal and thereby alter the angle at which the sheet flow will contact the upper surface of the fiber mat 14.

As will be appreciated, the combination of the angular offsets of the curtain flow and/or the flood pan orientation will determine the angle at which the coating composition contacts the fiber mat 14. The flow contact angle offset, particularly a total offset on the order of between about 5° and about 10°, typically in a direction opposite the machine direction, in combination with a suitably configured recess 44 will tend to suppress the formation of a backwave of the coating composition even as the fiber mat linear feed rate increases and will, therefore, tend to maintain or improve the uniformity and orientation of the resulting coated fiber product.

As also illustrated in FIG. 4, the recess 44 may be provided in a separate component 18a that can be attached to and removed from an opening provided in the flood pan 18 as required. Although, as illustrated, the component 18a includes flanges that extend over the portions of the flood pan 18 adjacent the opening, those of ordinary skill will appreciate that a wide range of configurations is possible for positioning and at least temporarily fixing the separate component 18a to the remainder of flood pan 18. Similarly, those of ordinary skill will appreciate that various seal, gasket or O-ring assemblies may be incorporated for providing a more liquid-tight seal between the separate component 18a and the flood pan 18.

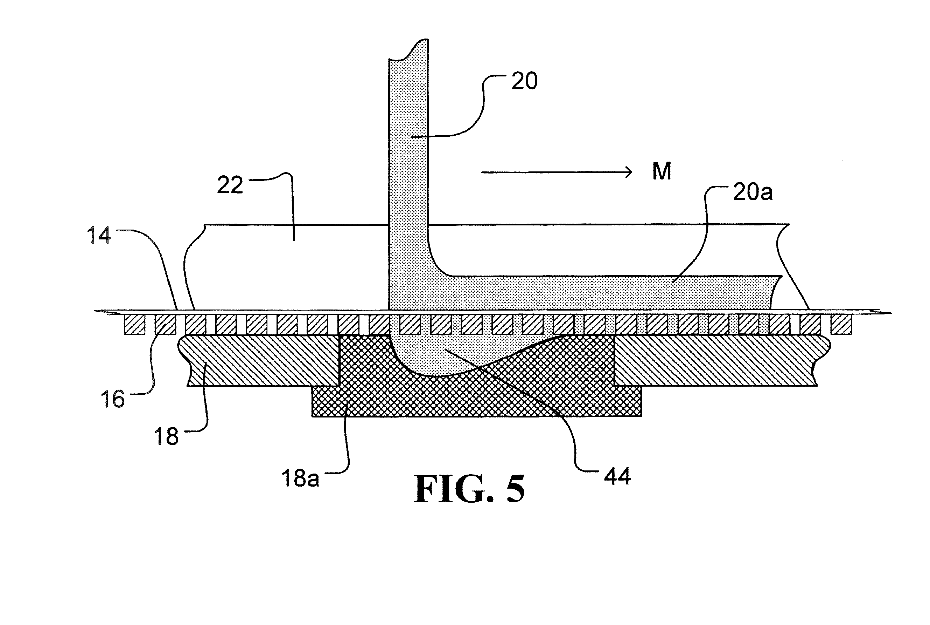

As illustrated in FIG. 5, particularly in comparison with FIG. 2, the recess 44 smoothes the transition of the flow of the coating composition 20 from its original substantially vertical direction to a substantially horizontal flow 20a in the machine direction. By easing this transition and providing additional volume in which the turbulence can dissipate, a flood pan 18 provided with a recess 44 according to the invention will tend to suppress formation of a backwave and improve or maintain the uniformity of the resulting coated fiber mat product relative to the uniformity that could be attained with the conventional apparatus of FIG. 2 while allowing increased linear run rates and/or coating composition flows, thereby improving productivity.

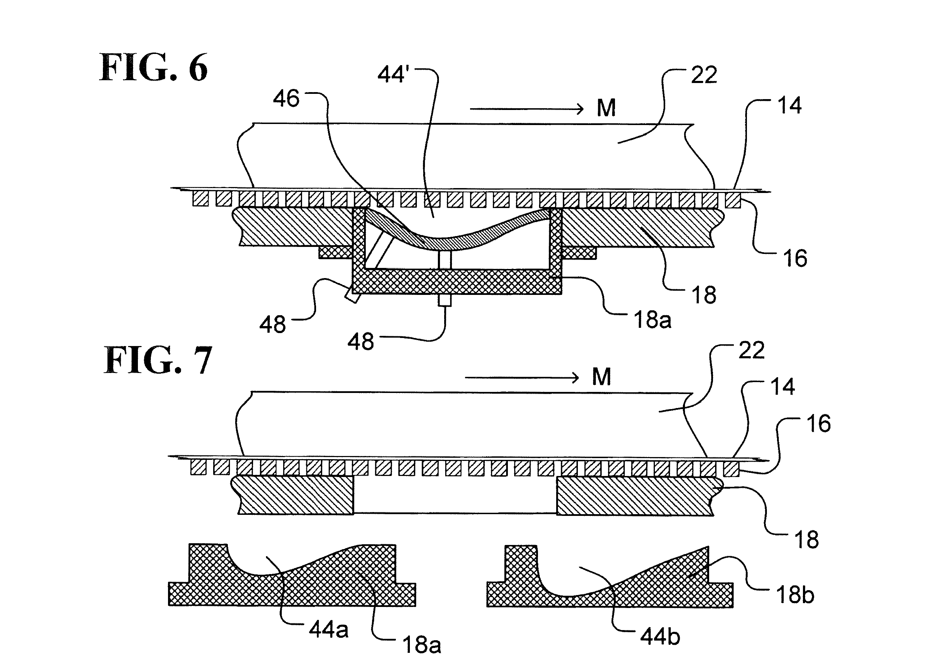

As illustrated in FIG. 6, the separate component 18a can incorporate a flexible membrane or other resilient sheet material 46 for defining a variable surface that forms a cavity 44'. In addition to the sheet material 46, the component 18a can incorporate actuators such as screws, levers or other devices 48 that are connected to, or will contact, one or more locations to the backside of the sheet material 46 and can be used to modify the shape and/or volume of the recess 44' without having to remove the component 18a. As illustrated in FIG. 7, if the sizing and orientation of the recess 44a is fixed within the component 18a, additional components, such as 18b, can be used to replace component 18a and thereby provide a differently configured recess 44b to be utilized for accommodating desired process parameter changes such as increased flow rates, line speeds or flow velocities.

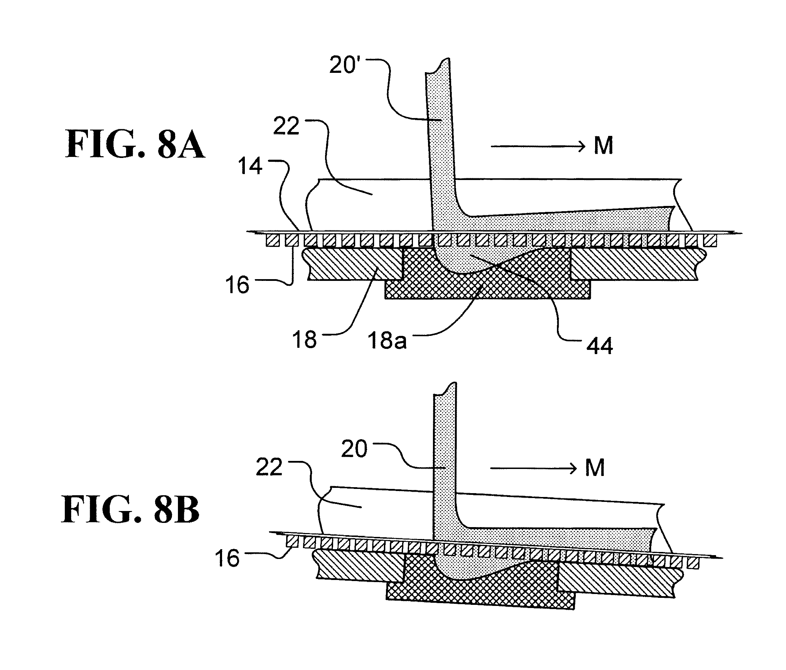

As illustrated in FIGS. 8A and 8B, and as discussed earlier in connection with FIG. 4, the angle at which the coating composition contacts the upper surface of the fiber mat 14 can be adjusted within some range by reconfiguring the coating device to eject a non-vertical flow, FIG. 8A, by inclining the flood pan 18 and/or conveyor, FIG. 8B, or some combination of the alterations in the flow direction and flood pan orientation.

As discussed above, the method and apparatus disclosed herein are believed to be useful in the application of a binder composition, such as an aqueous binder slurry, to oriented fiber mats that can then, in turn, be used in pultrusion or other forming operations to reinforce the final product. In such an operation, the coating device, typically a curtain coater, will discharge the slurry through a slot that extends across the width of the flood pan in a direction generally perpendicular to the machine direction of the process conveyor. The slurry is then discharged in a substantially vertical direction, in a continuous curtain, toward the upper surface of the non-woven web of glass strands supported by the conveyor.

A curtain coater will typically include a header for delivering the liquid uniformly into the curtain coater by maintaining substantially uniform back pressure along the length of the header. Conventional header design suggests that having an inlet area into the header that is at least eight times greater than the header outlet area *(i.e.,* the combined total area of the outlet holes, the holes themselves being sized to resist clogging by any of the slurry components) will be sufficient to produce sufficient back pressure and thereby maintain a substantially uniform exit flow rate. The exit flow rate itself will generally be set within a range that will result in a binder slurry exit velocity that will not result in excessive foam generation. Additional active components, such as compatible surfactants may also be incorporated into the slurry composition for suppressing foam generation.

The velocity of the curtain of slurry is a function of the discharge velocity of the slurry from the reservoir slot, the vertical distance between the slot and the surface of the fiber mat or web and the viscosity of the slurry. The flow of slurry, upon interacting with the web, conveyor and flood pan, is generally redirected to flow in the same direction as the conveyor and web, that is, the machine direction. Particularly at higher line rates, there may be a significant "pumping" or "dragging" action exerted by the conveyor and the fiber web on the accumulated slurry as they move through the flood pan. The rate at which the slurry is removed from the flood pan is a function of the supply rate of slurry into the flood pan, the thickness of the conveyor, the drag of the conveyor and fiber mat on the accumulated slurry, the viscosity of the slurry, depth of slurry in the flood pan and other factors. The volumetric flow of slurry supplied from the curtain coater is, by design, typically sufficient to ensure the web is fully submerged as it is carried through the flood pan downstream from the impact area.

Although the invention has been described in connection with certain exemplary embodiments, it will be evident to those of ordinary skill in the art that many alternatives, modifications, and variations may be made to the disclosed structures and methods in a manner consistent with the detailed description provided above. Also, will be apparent to those of ordinary skill in the art that various aspects of the disclosed exemplary embodiments could be used with any other embodiment(s) depending on the requirements. Accordingly, it is intended to embrace all such alternatives, modifications and variations that fall within the spirit and broad scope of the appended claims.

## Claims

1. An apparatus for coating liquid permeable fiber mats, comprising:
a conveyor (16) arranged for transporting a fiber mat (14) in a machine direction at a machine speed;
a coating device (24) provided above the conveyor for generating a flow of a coating composition (20), the flow being generally laminar prior to contacting an upper surface of the fiber mat in an impact zone;
a flood pan (18) having a primary surface extending below and generally parallel to the conveyer; and
an elongated recess (44) provided in the primary surface, the at least a portion of the recess being arranged below and generally aligned with the impact zone.

2. An apparatus for coating liquid permeable fiber mats according to claim 1, wherein:
the elongated recess has a tapered configuration extending in the machine direction.

3. An apparatus for coating liquid permeable fiber mats according to claim 2, wherein:
the elongated recess has a curved surface that gradually transitions between an impact region and an outlet region.

4. An apparatus for coating liquid permeable fiber mats according to claim 3, wherein:
the elongated recess has maximum depth within the impact region.

5. An apparatus for coating liquid permeable fiber mats according to claim 2, wherein:
the impact region has a first length in the machine direction;
the outlet region has a second length in the machine direction; and
a ratio between the first length and the second length is between about 1:1 and about 1:8.

6. An apparatus for coating liquid permeable fiber mats according to claim 1, wherein:
the coating device is configured for applying the flow of the coating composition to the impact zone along a plane that is substantially perpendicular to the upper surface of the fiber mat.

7. An apparatus for coating liquid permeable fiber mats according to claim 1, wherein:
the coating device is configured for applying the flow of the coating composition to the impact zone along a plane that is offset from a plane perpendicular to the upper surface of the fiber mat by up to about 15°.

8. An apparatus for coating liquid permeable fiber mats according to claim 7, wherein:
the coating device is configured for applying the flow of a coating composition to the impact zone along a plane that is offset from a plane perpendicular to the upper surface of the fiber mat by between about 5° and about 10°.

9. An apparatus for coating liquid permeable fiber mats according to claim 1, wherein:
the conveyor is configured for orienting the fiber mat for receiving a substantially vertical flow of the coating composition from the coating device along a plane that is offset from a plane perpendicular to the upper surface of the fiber mat by between about 5° and about 10°.

10. An apparatus for coating liquid permeable fiber mats according to claim 1, wherein:
the fiber mat is oriented relative to the flow of the coating composition for receiving the flow of the coating composition along a plane that is offset from a plane perpendicular to the upper surface of the fiber mat by between about 5° and about 10°.

11. An apparatus for coating liquid permeable fiber mats according to claim 1, wherein:
the recess has a configuration sufficient to suppress formation of a backwave (22) of the coating composition that extends above the upper surface of the fiber mat.

12. An apparatus for coating liquid permeable fiber mats according to claim 1, wherein:
the recess includes a region defined by an upper surface of a flexible member (46).

13. An apparatus for coating liquid permeable fiber mats according to claim 12, wherein:
the flexible member is attached to an actuating assembly whereby movement of the actuating assembly will reposition the upper surface of the flexible member.

14. An apparatus for coating liquid permeable fiber mats according to claim 12, wherein:
repositioning the upper surface of the flexible member determines an effective volume of the recess.

15. An apparatus for coating liquid permeable fiber mats according to claim 8, wherein:
the recess has a configuration sufficient to suppress formation of a backwave of the coating composition that extends above the upper surface of the fiber mat.

16. A method of coating a liquid permeable fiber mat comprising:
conveying a fiber mat (14) in a machine direction on a conveyer (16) at a mat velocity;
applying a liquid coating composition (20) to an impact zone on an upper surface of the fiber mat, the liquid coating composition being applied as a substantially laminar flow in a direction generally perpendicular to the upper surface of the fiber mat; and
directing a majority of the flow of the coating composition that has passed through the fiber mat and the conveyor into a recess (44), the recess being sized and configured for redirecting the majority of the coating composition into a saturating flow moving with the fiber mat in the machine direction (M) within the recess.

17. A method of coating a liquid permeable fiber mat according to claim 16, wherein:
the accumulation of the coating composition on the upper surface of the fiber mat is substantially limited to a portion of the fiber mat extending in a machine direction from the impact zone.

18. A method of coating a liquid permeable fiber mat according to claim 16, further comprising:
providing a first recess configuration adapted for a first flow rate of the coating composition and
providing a second recess configuration adapted for a second flow rate of the coating composition, wherein the first and second flow rates are different.

19. A method of coating a liquid permeable fiber mat according to claim 18, wherein:
providing the first and second recess configurations include a step selected from a group consisting of exchanging a first and a second recess module configured for attachment to the flood pan and repositioning an upper surface of a flexible member.

20. A method of coating a liquid permeable fiber mat according to claim 16, wherein:
the fiber mat is an oriented continuous filament mat; and
the coating composition is an aqueous binder slurry.

21. A method of coating a liquid permeable fiber mat according to claim 16, wherein:
the substantially laminar flow contacts the impact zone of the fiber mat in a direction offset by between about 5° and about 10° opposite the machine direction from a plane perpendicular to the upper surface of the fiber mat.
